(19) Europäisches Patentamt
European Patent Office
Office européen des brevets

(11) **EP 2 876 569 A1**

(12) **EUROPEAN PATENT APPLICATION**

(43) Date of publication:
**27.05.2015 Bulletin 2015/22**

(51) Int Cl.:
*G06F 21/31* *(2013.01)*

(21) Application number: **13306611.8**

(22) Date of filing: **26.11.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Maetz, Yves**
**35576 Cesson-Sévigné (FR)**

• **Eluard, Marc**
**35576 Cesson-Sévigné (FR)**
• **Durand, Alain**
**35576 Cesson-Sévigné (FR)**

(74) Representative: **Huchet, Anne et al**
**Technicolor**
**1, rue Jeanne d'Arc**
**92443 Issy-les-Moulineaux Cedex (FR)**

(54) **Apparatuses and methods for password authentication**

(57) A user inputs (S11) a password proposal P at a user device (110). The user device (110) scrambles (S12) the password proposal to obtain a scrambled password proposal [P]. The scrambling function retains some characteristics of the password proposal and thus enables comparison between the scrambled password proposal [P] and a scrambled reference password [$P_{ref}$] in the protected space. The scrambled password proposal is sent to a server (120) that may be implemented on the user device (110). The server (120) calculates an edit distance between the scrambled password proposal [P] and the scrambled reference password [$P_{ref}$] and compares this with a threshold value. If the edit distance is not greater than the threshold, then it is determined (S13) that the scrambled password proposal [P] and the scrambled reference password [$P_{ref}$] are similar and that the user can be authenticated (S14). The invention can provide resistance to typing errors in the password proposals.

Figure 2

EP 2 876 569 A1

**Description**

TECHNICAL FIELD

The present invention relates generally to computer systems and in particular to the treatment of passwords in such systems.

BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Passwords are ubiquitous in today's computer systems, for example to authenticate a user for log-on. In its generic definition, a password is constituted of a succession of symbols taken within a predefined alphabet (for example: 4 numerical values for PIN code). A password is generally stronger the longer it is, in particular if the password is a mixture of uppercase and lowercase letters, numbers, and characters such as &, " and #. However, a more complicated password is generally more complicated to type properly, especially since the typed characters do not appear on the screen. In addition, since users may be obliged to input the passwords many times a day, the passwords are often typed very quickly. It is thus not surprising that an input password can contain typing errors. Moreover touchscreen-based devices like smartphones and tablets use virtual keyboards to enter some text, including passwords. With this type of input, typing errors can be quite frequent.

The prior art comprises a number of solutions that provide passwords that are resistant to typing errors.

The tool Password Variator builds a file with all possible variations on the password, emulating up to three typos such as missed characters, duplicated characters, extra characters, wrong order and wrong case. Andrew Mehler and Steven Skiena provide a different solution in Improving Usability Through Password-Corrective Hashing. Their solution processes the password before hashing - for example by sorting the input password alphabetically to correct transpositions - so that it is likely that a slightly misspelt password hashes to the same hash value as the correct password. It is evident that such multiplication of "acceptable" passwords drastically reduces the strength of the password since many different passwords hash to the same value, including passwords that differ from much more than one or two typos.

The solutions in US 7373516 and JP 2005/208763 compare an input password with a stored password in the "password space," i.e. in the clear, to determine if the former is "similar" to the latter. However, since these solutions require a comparison of the plaintext versions of the password, they cannot be used in real systems where storing the password in clear is generally unacceptable for obvious security reasons. Generally, authentication is handled by a server that stores a hashed version of the password, to be compared with a hashed version of the password proposal typed by the user. This is to make stealing of the passwords file less valuable.

JP 2007-114976 teaches a device, such as a PC, that among other things provides the function of keeping a count of the number of times a mistyped password is input and storing a mistyped password as an acceptable password when the number of times is sufficiently large, e.g. ten times. The skilled person will appreciate that the solution is insecure since there does not appear to be any control of the addition of the mistyped passwords; when a wrong password has been input ten times, it is stored as an acceptable password, which means that a hacker only needs to input a password ten times to have it accepted.

It can therefore be appreciated that there is a need for a solution that can allow an authentication system to allow mistyped passwords without having the drawbacks of the prior art solutions. The present invention provides such a solution.

SUMMARY OF INVENTION

In a first aspect, the invention is directed to an apparatus for authenticating a password proposal. The apparatus comprises an interface configured to receive a scrambled password proposal resulting from a scrambling function applied to the password proposal and a processor configured to: retrieve a scrambled reference password, the scrambled reference password resulting from a scrambling function applied to a reference password; calculate an edit distance between the scrambled password proposal received by the interface and the retrieved scrambled reference password, the scrambled password proposal resulting from a scrambling function applied to the password proposal; compare the calculated edit distance with a threshold value; and determine that the password proposal corresponds to the reference password in case the edit distance is not greater than the threshold value.

In a first embodiment, the scrambling function comprises at least one of shuffling and substitution.

In a second embodiment, the scrambling function further comprises padding.

In a third embodiment, the scrambling function is key based. It is advantageous that the key is dependent on a user identity.

In a fourth embodiment, the interface is configured to receive the password proposal scrambled.

In a fifth embodiment, the processor is further configured to apply the scrambling function to the password proposal to obtain the scrambled password proposal.

In a sixth embodiment, the processor is further configured to weight the edit distance using a length of the password proposal or a length of the scrambled password proposal.

In a second aspect, the invention is directed to an apparatus for processing a password proposal. The apparatus comprises a user interface configured for receiving the password proposal and a processor configured to process the password proposal using a scrambling function comprising at least one of shuffling and substitution to obtain a scrambled password proposal, wherein the scrambling function is arranged to enable detection of a number of input errors in the scrambled password proposal when compared to a scrambled reference password, the scrambled password proposal resulting from a scrambling function applied to the password proposal.

In a first embodiment, the apparatus further comprises an interface for sending the scrambled password proposal to a server.

In a second embodiment, the apparatus further comprises the apparatus for authenticating a password proposal according to the first aspect.

In a third aspect, the invention is directed to a method for authenticating a password proposal. A processor receives a password proposal resulting from a scrambling function applied to the password proposal; retrieves a scrambled reference password, the scrambled reference password resulting from a scrambling function applied to a reference password; calculates an edit distance between the received scrambled password proposal and the retrieved scrambled reference password; compares the calculated edit distance with a threshold value; and determines that the password proposal corresponds to the reference password in case the edit distance is not greater than the threshold value.

In a fourth aspect, the invention is directed to a method for processing a password proposal. A processor of a user device receives the password proposal and processes the password proposal using a scrambling function comprising at least one of shuffling and substitution to obtain a scrambled password proposal, wherein the scrambling function is arranged to enable detection of a number of input errors in the scrambled password proposal when compared to a scrambled reference password, the scrambled password proposal resulting from a scrambling function applied to the password proposal.

In a first embodiment, the processor further sends the scrambled password proposal to a server.

In a fifth aspect, the invention is directed to a non-transitory computer program support storing instructions that, when executed by a processor performs the method of the fourth aspect.

## BRIEF DESCRIPTION OF DRAWINGS

Preferred features of the present invention will now be described, by way of non-limiting example, with reference to the accompanying drawings, in which

Figure 1 illustrates an exemplary system in which the invention may be implemented; and
Figure 2 illustrates an exemplary method of password authentication of the present invention.

## DESCRIPTION OF EMBODIMENTS

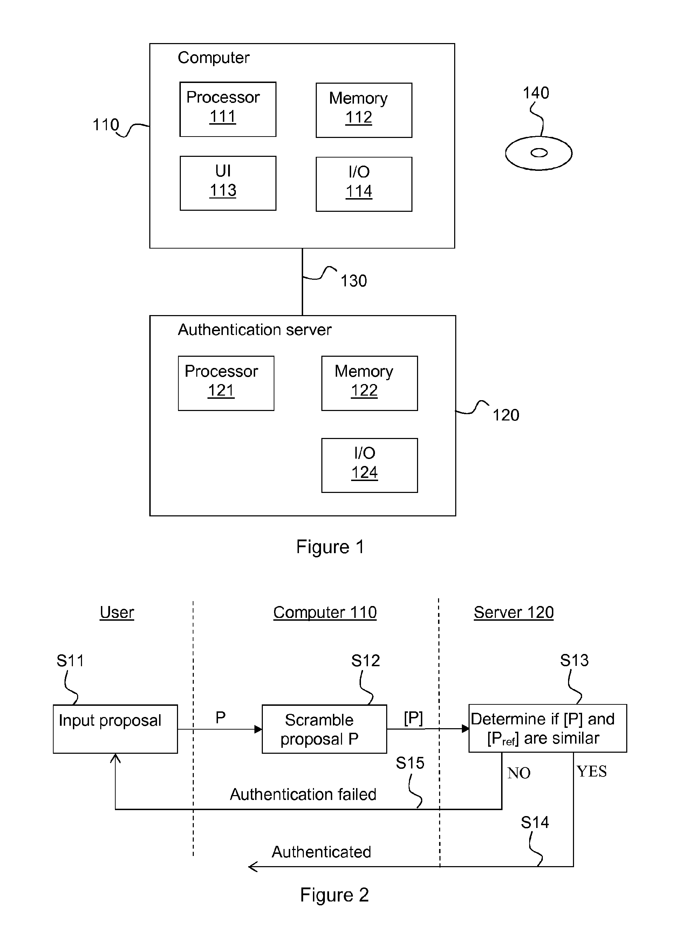

Figure 1 illustrates an exemplary system in which the invention may be implemented. The system comprises a computing device ("computer") 110 and an authentication server 120. The computer 110 and the authentication server (hereinafter "server") 120 can be any kind of suitable computer or device capable of performing calculations, such as a standard Personal Computer (PC) or workstation. The computer 110 and the server 120 each preferably comprise at least one processor 111, 121, internal of external RAM memory 112, 122 for storing reference passwords, a user interface 113 for interacting with a user, and a second interface 114, 124 for interaction with other devices over connection 130. The computer 110 and the server 120 each also preferably comprise an interface for reading a software program from a digital data support 140 that stores instructions that, when executed by a processor, performs any of the password methods described hereinafter. The skilled person will appreciate that the illustrated devices are very simplified for reasons of clarity and that real devices in addition would comprise features such as persistent storage. The skilled person will appreciate that the present invention may also be implemented on just the computer 110 if the password just provides access to the computer itself; in this case, the server 120 is implemented in the computer.

Figure 2 illustrates a first exemplary method of password authentication of the present invention. It is assumed that the user has already provided a user name and a password to the server 120. It is to be noted that the user name is superfluous in situations when it is implicit, such as when there is only one user, which may be the case on a smartphone or a tablet. It is also assumed that the server 120 has processed the password using a "scrambling" function (hereafter noted [ ]) and stored the resulting scrambled reference password $[P_{ref}]$. The scrambling function, which preferably is keyed using key based on a value specific to the user such as the user name, yields a version of an input string that retains certain qualities of the string while not resembling the string as will be further described hereinafter. In this description, the expressions "password space," "in the password space" etc. refer to any passwords and password proposals as input by a user; the expressions "protected space," and "in the protected space" refer to any passwords and password proposals that have been processed using the scrambling function. In particular, the scrambling function allows a comparison between a scrambled password proposal and a scrambled reference password to determine the characters (or syllables) in the password proposal that have been incorrectly entered.

In a first step, the user inputs S11 a password proposal P (hereafter named proposal) using the user interface 113 of the computer 110, which then processes S12 the proposal using the scrambling function, using the same key if a key was used, to obtain a proposal [P] in the protected space, i.e. a scrambled proposal. The scrambled proposal [P] is then sent to the server 120. The skilled person will appreciate that it is possible, even preferable, to use so-called salts and encryption - such as the Secure Authenticated Channel (SAC) described in WO 2006/048043 - to further protect the proposal during the transfer to the server 120, but this will not be described as it is well known to the skilled person and beyond the scope of the present invention. The skilled person will also appreciate that it is possible to transfer the password proposal P in the password space through a SAC to the server 120 that then performs processing step S12.

The server 120 receives the scrambled proposal [P] and compares the scrambled proposal [P] and the scrambled reference password $[P_{ref}]$ to determine S13 if they are similar. The server 120 can then, provided that the scrambled proposal [P] and the scrambled reference password $[P_{ref}]$ are similar, authorize (i.e. authenticate) the user and output a notification to this effect. Otherwise the user is not authorized S15 (i.e. not authenticated) and is preferably notified of this and it is possible that the user may be offered a new attempt to input the proposal.

It will be noted that using prior art hash functions it is only possible to determine if the scrambled proposal [P] and the scrambled reference password $[P_{ref}]$ are identical; it is not possible to determine if they are 'similar' - for example if a character is misspelt or if two characters have been switched - since such hash functions are constructed to generate totally different output even if the input differ by as little as a single bit.

However, since the scrambling function used in the present invention retains certain qualities of the string, it is, as will be seen, possible to compare if the scrambled proposal [P] and the scrambled reference password $[P_{ref}]$ to determine if they are identical or similar, wherein similar means that at most a preset threshold value of characters (or syllables or the like) in the proposal have been entered incorrectly.

Put another way, the proposal P and the reference password $P_{ref}$ are considered equivalent if they are similar in the secure space. This can be expressed as

$$R\left([P], [P_{ref}]\right) = \text{true},$$

where R is a similarity relation and [ ] is the scrambling function. The similarity relation R is deemed to be true if

$$d\left(P, P_{ref}\right) \leq \alpha,$$

where d is a string metric such as a distance measure and $\alpha$ is a threshold. Since the scrambling function retains certain properties of the input, this expression can be written as

$$d'\left([P], [P_{ref}]\right) \leq \beta.$$

Thus, if the distance between the scrambled proposal [P] and the scrambled reference password $[P_{ref}]$ is not greater than the threshold $\beta$, this means that the distance between the proposal P and the reference password $P_{ref}$ also is not greater than the threshold $\alpha$, which in turn means that the proposal is similar to the reference password. In some cases, depending of the function [ ], the distance function may be the same in the two spaces. More rarely, the thresholds may be equal too. The server 120 thus determines that the password proposal corresponds to the reference password. The server 120 can then grant S14 access to the user (or otherwise consider the user authenticated or authorized).

In a first preferred embodiment, the scrambling function [ ] expressed as [ ]: Vigenère ($H_1$(login), Shuffle

$(H_2(login), P))$, where

- Vigenère is encryption using the so-called Vigenère cipher, a key-based polyalphabetic substitution that replaces each character of the input string $(Shuffle (H_2(login), P))$ with a character that depends on the key $(H_1(login))$ and the input character,
- $H_1$ is a first half of a hash value generated, using for example MD5, SHA-1 or SHA-3, on a value (here the login),
- Shuffle is a key-based shuffling algorithm - such as the Shuffling algorithm described by Knuth in The Art of Computer Programming, 2nd edition - that permutes characters in the input string (P) according to the value of the key $(H_2(login))$, and
- $H_2$ is a second half of a hash value generated on a value (here the login).

The skilled person will appreciate that salts may be used to prevent dictionary attacks.

In addition, the input to the scrambling function may be padded to obtain a value with a fixed length that preferably is at least as long as the longest allowed password; in the first preferred embodiment 20 characters.

Further, the distance d and the relation R are defined using the so-called Levenshtein distance, which is the minimum number of edits needed to transform one string into another string, wherein the edit operations are insertion, deletion or substitution of a character. The distance d (in the password space) is weighted by the inverse length $L_P$ of the proposal. Thus,

$$d (P, P_{ref}) = (Levenshtein (P, P_{ref})) / L_P$$

This distance is compared to a threshold $\alpha$ that in the preferred embodiment is set to 0.2, thus allowing at most two errors in a ten-character proposal.

However, in order to enable the comparison in the secure space, it is necessary to weight the distance using the inverse length $L_{[P]}$ of the padded proposal, i.e. 20 in the preferred embodiment. A second threshold value $\beta$ is used for the comparison; $\beta$ is set to 0.1 in the preferred embodiment to allow two errors in the proposal.

$$R ([P], [P_{ref}]) = true, \text{ if and only if } d ([P], [P_{ref}]) \leq \beta, \text{ which corresponds to } d ([P], [P_{ref}]) = (Levenshtein ([P], [P_{ref}])) / L_{[P]} \leq \beta.$$

The skilled person will appreciate that a proper value for $\beta$ is important for the security of the system. For example, if the reference password is very short, then allowing two errors results in a weak system.

In a variant, the scrambling function [ ] expressed as

[ ]: Shuffle (H (fixed value), Vigenère (H (fixed value), P)), where

- Shuffle and Vigenère are the same as in the first preferred embodiment, and
- H is a hash value generated using a fixed value.

The skilled person will appreciate that other edit distance measures than the Levenshtein distance may be used, such as the Damerau-Levenshtein distance and the Hamming distance.

A number of examples will now further illustrate the invention.

Example 1

In Example 1, no salt is used, the proposal is padded using the character 'A', the login is MelYmzAdu and the reference password is 'Technicolor'. This gives a scrambled reference password 'OZHEGODJREHIISABLUKW'.

The list below shows a number of proposals and the corresponding scrambled proposals. In order to facilitate the reading, the characters in the scrambled proposals that differ from the correct proposal (except where missing) and from the scrambled reference password are indicated in bold, and the proposals that do not fulfill the relation are shaded:

| Proposal | f (Proposal) | Errors | d (P, $P_{ref}$) | d ([P], [$P_{ref}$]) |
|---|---|---|---|---|
| Technicolor | OZHEGODJREHIISABLUKW | 0 | 0 | 0 |
| Technicolo | OZHEGODJRE**Q**IISABLUKW | 1 | 0.1 | 0.05 |
| Technicolor**e** | OZHEGODJ**V**EHIISABLUKW | 1 | 0.08 | 0.05 |
| Techn**ci**olor | OZHE**M**ODDREHIISABLUKW | 2 | 0.18 | 0.1 |
| Technicolor**zz** | OZHEGO**CJQ**EHIISABLUKW | 2 | 0.15 | 0.1 |
| Technicol**zz** | **Z**ZHEGODJRE**P**IISABLUKW | 2 | 0.18 | 0.1 |
| Technicolor**zzz** | OZHEGO**CJU**EH**H**ISABLUKW | 3 | 0.21 | 0.15 |
| Technico**zzz** | **Z**ZHEGODJRE**P**IISABL**I**KW | 3 | 0.27 | 0.15 |
| **rolocinhceT** | **EGHERMDJROJIBSJQL**LKW | 10 | 0.91 | 0.5 |
| Techni | **A**ZHEE**O**DJRE**QIUS**ABL**J**KW | 5 | 0.83 | 0.25 |
| Technicolor**color** | OZH**V**G**ORJTEHTI**SABLU**Y**W | 5 | 0.31 | 0.25 |
| **Eluard** | **ASHEEZDERLQIUSSFLJ**KW | 11 | 1.67 | 0.55 |
| **Maetz** | **ALHEEHDBRAQIUSCNLJ**KW | 11 | 2.2 | 0.55 |
| **Durand** | **ASHEEYDERUQIUSPBLJ**KW | 10 | 1.67 | 0.5 |

As can be seen, 'Technicolor' is correct, leading to a distance of 0. 'Technicolo' and 'Technicolore' each has a single input error (the 'r' is missing in the first and an extra 'e' appears in the second), which, gives a weighted distances in the password space of 0.1 and 0.08 respectively (the difference coming from a difference in length in the password space) and a weighted distance in the secure space of 0.05.

Similarly, 'Technciolor', 'Technicolorzz' and 'Technicolzz' each has two input errors, leading to password space distances of 0.18, 0.15 and 0.18, and to a secure space distance of 0.1.

All of the other proposals comprise at least three input errors, have distances greater than the threshold values, and are thus not determined to be close.

Example 2

In Example 2, the salt 'fpdcag' is used, the proposal is padded using the character 'A', the login is MelYmzAdu and the reference password is 'Technicolor'. This gives a scrambled reference password 'FXTMINHFMTKLBFTJLCWL'. The proposals and the notation are the same as in Example 1.

| Proposal | f (Proposal) | Errors | d (P, $P_{ref}$) | d ([P], [$P_{ref}$]) |
|---|---|---|---|---|
| Technicolor | FXTMINHFMTKLBFTJLCWL | 0 | 0 | 0 |
| Technicolo | FXTMINHF**V**TKLBFTJLCWL | 1 | 0.1 | 0.05 |
| Technicolor**e** | FXTMINHFMT**O**LBFTJLCWL | 1 | 0.08 | 0.05 |
| Techn**ci**olor | FXTM**CN**HLMTKLBFTJLCWL | 2 | 0.18 | 0.1 |
| Technicolor**zz** | FXT**L**INHFMT**J**LBFTJLCWL | 2 | 0.15 | 0.1 |
| Technicol**zz** | FXTMINHF**U**TKL**M**FTJLCWL | 2 | 0.18 | 0.1 |
| Technicolor**zzz** | FXT**L**INHFM**SJ**LBFTJLCWL | 3 | 0.21 | 0.15 |
| Technico**zzz** | FXTM**IB**HF**U**TKL**M**FTJLCWL | 3 | 0.27 | 0.15 |
| **rolocinhceT** | **PVIMIEHQOTKURMT**CLCWL | 10 | 0.91 | 0.5 |
| Techni | FXTM**I**C**HDV**TKL**NF**T**V**LCWL | 5 | 0.83 | 0.25 |
| Technicolor**color** | FXT**A**INHFM**EM**LBF**H**JLCW**C** | 5 | 0.31 | 0.25 |
| **Eluard** | **MIXMDCHDV**TK**DNY**TVLCWL | 11 | 1.67 | 0.55 |
| **Maetz** | **BQFMACHDV**TK**NNR**TVLCWL | 11 | 2.2 | 0.55 |
| **Durand** | **VHTMDCHDV**TK**ANY**TVLCWL | 10 | 1.67 | 0.5 |

As can be seen, the distance values are the same as in Example 1 and Example 2 and the same proposals are determined to be close and thus accepted.

Example 3

In Example 2, the salt 'fpdcag' is used to generate a pseudo-random padding only, the login is MelYmzAdu and the reference password is 'Technicolor'. This gives a scrambled reference password 'OZPJGOIJWEHUIYABMUFR'. The proposals and the notation are the same as in Example 1 and Example 2.

| Proposal | f (Proposal) | Errors | d (P, $P_{ref}$) | d ([P], [$P_{ref}$]) |
|---|---|---|---|---|
| Technicolor | OZPJGOIJWEHUIYABMUFR | 0 | 0 | 0 |
| Technicolo | OZPJGOIJWE**N**UIYABMUFR | 1 | 0.1 | 0.05 |
| Technicolor**e** | OZPJGOIJ**V**EHUIYABMUFR | 1 | 0.08 | 0.05 |
| Techn**ci**olor | OZPJ**M**OIDWEHUIYABMUFR | 2 | 0.18 | 0.1 |
| Technicolor**zz** | OZPJGO**CJQ**EHUIYABMUFR | 2 | 0.15 | 0.1 |
| Technicol**zz** | **Z**ZPJGOIJWE**P**UIYABMUFR | 2 | 0.18 | 0.1 |
| Technicolor**zzz** | OZPJGO**CJQ**EH**H**IYABMUFR | 3 | 0.21 | 0.15 |
| Technico**zzz** | **Z**ZPJGOIJWE**P**UIYABM**I**FR | 3 | 0.27 | 0.15 |
| **rolocinhceT** | **E**GPJ**RM**IJW**O**JU**BYJQ**MLFR | 10 | 0.91 | 0.5 |
| Techni | **KZ**PJ**S**OIJWE**NUZ**YABM**A**FR | 5 | 0.83 | 0.25 |
| Technicolor**color** | OZP**V**GOR**JT**EH**T**IYABMU**YR** | 5 | 0.31 | 0.25 |
| **Eluard** | **KS**PJ**SZI**EWLNUZYSFMAFR | 11 | 1.67 | 0.55 |
| **Maetz** | **KL**PJ**SHIVW**ANUZYCNMAFR | 11 | 2.2 | 0.55 |
| **Durand** | **KS**PJ**SYI**EW**U**NUZYPBMAFR | 10 | 1.67 | 0.5 |

As can be seen, the distance values are the same as in Example 1 and the same proposals are determined to be close and thus accepted.
The skilled person will appreciate that it is preferred to protect the messages between the computer 110 and the server 120, for example by encryption using a salt. A preferred way to protect the messages is through the use of the Secure Authenticated Channel described in WO 2006/048043.
It will be appreciated that the present invention can provide password system that is resistant to typing errors and in which the comparison is made in the protected space.
Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

**Claims**

1.   An apparatus (120) for authenticating a password proposal comprising:

- an interface (124) configured to receive a scrambled password proposal, wherein the scrambled password proposal results from a scrambling function applied to the password proposal; and
- a processor (121) configured to:

- retrieve a scrambled reference password, the scrambled reference password resulting from the scrambling function applied to a reference password;
- calculate an edit distance between the scrambled password proposal received by the interface and the retrieved scrambled reference password;
- compare the calculated edit distance with a threshold value; and
- determine that the password proposal corresponds to the reference password in case the edit distance is not greater than the threshold value.

**2.** The apparatus of claim 1, wherein the scrambling function comprises at least one of shuffling and substitution.

**3.** The apparatus of claim 2, wherein the scrambling function further comprises padding.

**4.** The apparatus of claim 2, wherein the scrambling function is key based.

**5.** The apparatus of claim 4, wherein the key is dependent on a user identity.

**6.** The apparatus of claim 1, wherein the interface (124) is configured to receive the password proposal scrambled.

**7.** The apparatus of claim 1, wherein the processor (121) is further configured to apply the scrambling function to the password proposal to obtain the scrambled password proposal.

**8.** The apparatus of claim 1, wherein the processor (121) is further configured to weight the edit distance using a length of the password proposal or a length of the scrambled password proposal.

**9.** An apparatus (110) for processing a password proposal comprising:

- a user interface (113) configured for receiving the password proposal; and
- a processor (111) configured to process the password proposal using a scrambling function comprising at least one of shuffling and substitution to obtain a scrambled password proposal, wherein the scrambling function is arranged to enable detection of a number of input errors in the scrambled password proposal when compared to a scrambled reference password, the scrambled password proposal resulting from a scrambling function applied to the password proposal.

**10.** The apparatus of claim 9, further comprising an interface (114) for sending the scrambled password proposal to a server (120).

**11.** The apparatus of claim 9, wherein the apparatus further comprises the apparatus (120) for authenticating a password proposal according to any one of claims 1 to 8.

**12.** A method for authenticating a password proposal, the method comprising the steps at a processor (121) of:

- receiving a scrambled password proposal, wherein the scrambled password proposal results from a scrambling function applied to the password proposal;
- retrieving a scrambled reference password, the scrambled reference password resulting from the scrambling function applied to a reference password;
- calculating an edit distance between the received scrambled password proposal and the retrieved scrambled reference password;
- comparing the calculated edit distance with a threshold value; and
- determining (S13) that the password proposal corresponds to the reference password in case the edit distance is not greater than the threshold value.

**13.** A method for processing a password proposal comprising the steps at a processor (111) of a user device (110) of:

- receiving the password proposal; and
- processing (S12) the password proposal using a scrambling function comprising at least one of shuffling and substitution to obtain a scrambled password proposal, wherein the scrambling function is arranged to enable detection of a number of input errors in the scrambled password proposal when compared to a scrambled reference password, the scrambled password proposal resulting from a scrambling function applied to the password proposal.

**14.** The method of claim 13, further comprising the step of sending the scrambled password proposal to a server (120).

**15.** A non-transitory computer program support (140) storing instructions that, when executed by a processor (111) performs the method of any one of claims 13 to 14.

Computer

Processor
111

Memory
112

UI
113

I/O
114

110

140

130

Authentication server

Processor
121

Memory
122

I/O
124

120

Figure 1

User

Computer 110

Server 120

S11

S12

S13

Input proposal

P

Scramble
proposal P

[P]

Determine if [P] and
$[P_{ref}]$ are similar

S15

NO

YES

Authentication failed

S14

Authenticated

Figure 2

Europäisches
Patentamt
European
Patent Office
Office européen
des brevets

# EUROPEAN SEARCH REPORT

Application Number

EP 13 30 6611

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/254875 A1 (SAMA VENKATA BABJI [IN]) 26 September 2013 (2013-09-26) * paragraphs [0028], [0033] - paragraph [0034] * * paragraph [0054] - paragraph [0057] * * figures 1,3 * | 1-15 | INV. G06F21/31 |
| A | GB 2 446 420 A (TOMLINSON MARTIN [GB]; TJHAI CENJUNG [GB]; AMBROZE MARCEL [GB]; AHMED) 13 August 2008 (2008-08-13) * page 2 - page 4 * | 1-15 | |
| A | GREGORY V BARD: "Spelling-Error Tolerant, Order-Independent Pass-Phrases via the Damerau-Levenshtein String-Edit Distance Metric", INTERNATIONAL ASSOCIATION FOR CRYPTOLOGIC RESEARCH,, vol. 20061103:161300, 20 October 2006 (2006-10-20), pages 1-8, XP061001967, [retrieved on 2006-10-20] * the whole document * | 1-15 | TECHNICAL FIELDS SEARCHED (IPC) G06F |
| A | US 2010/192205 A1 (CHAUDHRY GAURAV [US] ET AL) 29 July 2010 (2010-07-29) * the whole document * | 1-15 | |

The present search report has been drawn up for all claims

| Place of search | Date of completion of the search | Examiner |
|---|---|---|
| The Hague | 24 April 2014 | Cartrysse, Kathy |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 30 6611

This annex lists the patent family members relating to the patent documents cited in the above-mentioned European search report.
The members are as contained in the European Patent Office EDP file on
The European Patent Office is in no way liable for these particulars which are merely given for the purpose of information.

24-04-2014

| Patent document cited in search report | | Publication date | Patent family member(s) | | Publication date |
|---|---|---|---|---|---|
| US 2013254875 | A1 | 26-09-2013 | NONE | | |
| GB 2446420 | A | 13-08-2008 | NONE | | |
| US 2010192205 | A1 | 29-07-2010 | US 2010192205 A1<br>US 2012246708 A1 | | 29-07-2010<br>27-09-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7373516 B
- JP 2005208763 A
- JP 2007114976 A
- WO 2006048043 A